# EUROPEAN PATENT SPECIFICATION

(11) **EP 2 561 027 B1**
(45) Date of publication and mention of the grant of the patent: **05.03.2014**
(21) Application number: 11717065.4
(22) Date of filing: 07.04.2011
(51) Int. Cl.: C09J 133/00

(54) **PRESSURE SENSITIVE ADHESIVES CONTAINING REACTIVE, SURFACE-MODIFIED NANOPARTICLES**
DRUCKEMPFINDLICHE KLEBESTOFFE ENTHALTEND REAKTIVE OBERFLÄCHENMODIFIZIERTE NANOTEILCHEN
ADHESIVES SENSIBLES À LA PRESSION CONTENANT DES NANOPARTICULES REACTIVES A SURFACE MODIFIÉE

(30) Priority: 20.04.2010 US 325921 P
(43) Date of publication of application: 27.02.2013
(73) Proprietor: 3M Innovative Properties Company, Saint Paul, MN 55133-3427 (US)
(72) Inventor: MECHERNICH, Silke, D., 41453 Neuss (DE); ECKERT, Adrian S., 82229 Seefeld (DE); TRASER, Steffen, 41453 Neuss (DE); ERDOGAN-HAUG, Belma, Saint Paul Minnesota 55133-3427 (US)
(74) Representative: Herzog, Fiesser & Partner
(86) International application number: PCT/US2011/031507
(87) International publication number: WO 2011/133331

(56) References cited:
- EP-A1- 2 314 651
- WO-A2-02/062881
- WO-A2-2009/131920

## Description

### FIELD

The present disclosure relates to pressure sensitive adhesives containing nanoparticles surface modified with reactive silane surface-modifying agents.

### SUMMARY

Briefly, in one aspect, the present disclosure provides a pressure sensitive adhesive composition comprising an acrylic copolymer comprising the reaction product of at least one (meth)acrylate monomer and at least 0.5 weight percent of at least one vinyl carboxylic acid based on the total weight of the acrylic copolymer; and between 0.5 and 8 parts by weight, inclusive, surface-modified silica nanoparticles per 100 parts by weight of the acrylic copolymer. The surface-modified silica nanoparticles comprise nanoparticles having a silica surface and a plurality of silane surface-modifying groups covalently bonded to the silica surface. Although some of the silane surface modifying groups may be non-reactive, at least 25 mole percent of the plurality of silane surface-modifying groups comprise reactive silane surface-modifying groups.

In some embodiments, the acrylic copolymer comprises the reaction product of at least one (meth)acrylate monomer and no greater than 5 weight percent, e.g., between 1.5 and 3 percent, inclusive, of the vinyl carboxylic acid based on the total weight of the acrylic copolymer. In some embodiments, at least one vinyl carboxylic acid is acrylic acid.

In some embodiments, the at least one (meth)acrylate monomer is selected from the group consisting of isooctyl (meth)acrylate and 2-ethylhexyl (meth)acrylate. In some embodiments the acrylic copolymer comprises the reaction product of a first (meth)acrylate monomer and a second (meth)acrylate monomer. In some embodiments, the second (meth)acrylate monomer is nonpolar.

In some embodiments, the pressure sensitive adhesive further comprises a tackifier, e.g., a hydrocarbon tackifier, e.g., a hydrogenated hydrocarbon tackifier.

In some embodiments, the composition comprises 2 to 6 parts by weight, inclusive, e.g., 3 to 5 parts by weight, inclusive, of the surface-modified silica nanoparticles per 100 parts by weight of the acrylic copolymer. In some embodiments, the reactive silane surface-modifying agent comprises a (meth)acryloxyalkyl-tri alkoxy-silane, e.g., 3-methacryloxypropyl-trimethoxy-silane.

In some embodiments, at least 5 mole percent of the plurality of silane surface-modifying groups comprise non-reactive silane surface-modifying groups. In some embodiments, the molar ratio of the reactive surface-modifying groups to the non-reactive silane surface-modifying groups is at least 50:50. In some embodiments, the non-reactive silane surface-modifying groups comprise a C4 to C12, alkyl or aryl group, e.g., trimethoxy phenyl silane.

In some embodiments, the surface-modified silica nanoparticles are substantially spherical. In some embodiments, the surface-modified silica nanoparticles have an average particle size of less than 50 nm, e.g., between 9 and 25 nm, inclusive, as determined by the Transmission Electron Microscopy Procedure.

In some embodiments, the adhesive has a Shear Time of at least 300 minutes as measured according to the Static Shear Test Procedure using a polished stainless steel plate cleaned first using methyl ethyl ketone, and second with n-heptane. In some embodiments, the adhesive has a Shear Time of at least 2000 minutes as measured according to the Static Shear Test Procedure using a polished stainless steel plate cleaned first using methyl ethyl ketone, and second with n-heptane. In some embodiments, the adhesive has a 90 degree peel force of at least 3 N/12.7 mm as measured according to the 90° Angle Peel Adhesion Strength Procedure when using a polypropylene substrate cleaned using a mixture of isopropyl alcohol : distilled water (1:1).

### BRIEF DESCRIPTION OF THE DRAWINGS

FIG. 1 is a plot of the static shear on stainless steel versus the 90 degree peel force from polypropylene as a function of the amount of reactive surface-modified silica nanoparticles in a pressure sensitive adhesive.
FIG. 2 is a plot of the static shear on stainless steel versus the 90 degree peel force from polypropylene as a function of the molar ratio of reactive to non-reactive surface modifying groups.

### DETAILED DESCRIPTION

Generally, adhesives, e.g., pressure sensitive adhesives (PSA), including acrylic adhesives are well-known. The use of additives such as tackifiers, plasticizers, and fillers to modify the performance of adhesives is also known. However, although individual components of an adhesive formula may be known, the selection of a specific combination of components and their relative amounts in order to achieve specific, desired end-use requirements remains a significant challenge.

The use of surface-modified nanoparticles in resins, including curable resins is also known. It has even been suggested that reactive surface-modified nanoparticles could be incorporated into a PSA. However, like any other potential additive, selecting the specific nanoparticles and surface-modifying agents, and formulating a particular adhesive incorporating such surface-modified nanoparticles remains a significant challenge.

Generally, the present disclosure provides pressure sensitive adhesives comprising silica nanoparticles, surface modified with reactive, silane functional groups. These reactive, surface-modified nanoparticles are dispersed in an acrylic adhesive.

Generally, the acrylic adhesive comprises an acrylic copolymer comprises the reaction product of a mixture of a first alkyl (meth)acrylate and a vinyl carboxylic acid. As used herein, "(meth)acrylate" refers to an acrylate and/or methacrylate. For example, butyl (meth)acrylate refers to butyl acrylate and/or butyl methacrylate.

The alkyl group of the first alkyl (meth)acrylate contains 4 to 18 carbon atoms. In some embodiments, this alkyl group contains at least 5 carbon atoms. In some embodiments, this alkyl group contains no greater than 8 carbon atoms. In some embodiments, the alkyl group of the first alkyl (meth)acrylate has eight carbon atoms, e.g., isooctyl (meth)acrylate and/or 2-ethylhexyl (meth)acrylate.

Exemplary vinyl carboxylic acids that may be useful in some embodiments of the present disclosure include acrylic acid, methacrylic acid, itaconic acid, maleic acid, fumaric acid, and β-carboxyethylacrylate. Generally, the acrylic copolymers of the present disclosure comprise at least 0.5% by weight (wt.%), in some embodiments, at least 1.5 wt.%, or even at least 2 wt.% vinyl carboxylic acid based on the total weight of the acrylic copolymer. In some embodiments, the acrylic copolymer comprises no greater than 10 wt.%, in some embodiments, no greater than 6 wt.%, no greater than 5 wt.% or even no greater than 3 wt.% vinyl carboxylic acid. In some embodiments, the acrylic copolymer comprises 1 to 5 wt.%, inclusive, e.g., 1.5 to 3 wt.%, inclusive, vinyl carboxylic acid based on the total weight of the acrylic copolymer.

In some embodiments, the mixture may comprise one or more additional alkyl(meth)acrylates. In some embodiments, the additional alkyl(meth)acrylate is a nonpolar (meth)acrylate. Exemplary nonpolar acrylates include isobornyl acrylate, isobornyl methacrylate and isophorylacrylate.

In some embodiments, the PSAs of the present disclosure may include common additives such as tackifiers and plasticizers. Generally, tackifiers are materials that are compatible with the acrylic copolymer to which they are added and have a glass transition temperature (Tg) greater than the Tg of the acrylic copolymer. In contrast, a plasticizer is compatible with the acrylic copolymer but has a Tg less than the Tg of the acrylic copolymer. Although the actual Tg varies depending on the formulation of the acrylic copolymer, the Tg of acrylic copolymers typically less than -20 °C, e.g., less than -30 °C, less than -40 °C, or even less than -50 °C.

In some embodiments, the adhesives of the present disclosure include at least one tackifier. For example, in some embodiments, some tackifiers will improve the adhesion to low surface energy substrates such as polypropylene and polyethylene. Exemplary high Tg tackifiers include hydrocarbon resins, e.g., aliphatic- or aromatic-modified C5 to C9 hydrocarbons, terpenes, and rosin esters. Exemplary low Tg tackifiers include terpene phenolic resins, terpenes, hydrocarbon resins, e.g., aliphatic- or aromatic-modified C5 to C9 hydrocarbons (e.g., C9 hydrocarbon tackifiers), and rosin esters.

In some embodiments, hydrogenated hydrocarbon tackifiers may be preferred. In some embodiments, partially hydrogenated hydrocarbon tackifiers may be preferred. Exemplary hydrogenated hydrocarbon tackifiers include, C9 and C5 hydrocarbons such as those available from Eastman Chemical Co., Middelburg, Netherlands under the trade designations REGALITE (e.g., REGALITE S-5100, R-7100, R-9100, R-1125, S-7125, S-1100, and R-1090); REGALREZ (e.g., REGALREZ 6108, 1085, 1094, 1126, 1126, 1139, and 3103); PICCOTAC; and EASTOTAC, those available from Arakawa Chemical Inc., Chicago, Illinois, under the trade designation ARKON (e.g.., AKRON P-140, P-125, P-115, P-100, P-90, M-135, M-115, M-100, and M-90), and those available form Exxon Mobil Corp., Irving, Texas, under the trade name ESCOREZ (e.g., ESCOREZ 500).

In some embodiments, the adhesives of the present disclosure comprise 5 to 40 parts by weight tackifier based on the total weight of the acrylic copolymer. For example, in some embodiments, the adhesive comprises 5 to 30, or even 15 to 25 parts by weight tackifier based on the total weight of the acrylic copolymer.

Generally, the addition of a tackifier will increase peel adhesion; however, the presence of a tackifier also tends to reduce cohesion, resulting in a decrease in shear performance. The inclusion of polar crosslinkable monomers such as acrylic acid may be added to increase cohesion and shear strength; however, the use of polar crosslinkable monomers also tends to decrease the peel strength. The present inventors have surprisingly discovered that reactive, surface-modified nanoparticles can be used to improve cohesive strength and shear performance, without significantly decreasing the peel performance, particularly on low surface energy substrates.

As used herein, a "low surface energy substrate" is a substrate having a surface that exhibits low polarity and a critical surface tension of no greater than 50 mN/m (dyne/cm), e.g., no greater than 45 mN/m, 43 mN/m, 40 mN/m, or even no greater than 30 mN/m. The critical surface tension may be measured as described by Owens et al. in the Journal of Applied Polymer Science, v. 13 p. 1741-1747 (1969). Exemplary substrates and their approximate critical surface tensions include: polyvinyl chloride (39 mN/m), polyvinyl acetate (37 mN/m), polystyrene (36 mN/m), low density polyethylene (31 mN/m), polypropylene (29 mN/m), poly(meth)acrylates, polyesters, and combinations thereof.

Generally, "surface modified nanoparticles" comprise surface treatment agents attached to the surface of a nanometer scale core. In some embodiments, the core is substantially spherical. As used herein, "substantially spherical" means the particles are approximately equi-axial having a ratio of major axis to minor axis of 1 to 1.5. In some embodiments, the nanoparticle cores take the shape of a string-of-pearls.

In some embodiments, the cores are relatively uniform in primary particle size. In some embodiments, the cores have a narrow particle size distribution. In some embodiments, multimodal size distributions may be used. In some embodiments, the core is substantially fully condensed. In some embodiments, the core is amorphous. In some embodiments, the core is isotropic. In some embodiments, the particles are substantially non-agglomerated. In some embodiments, the particles are substantially non-aggregated in contrast to, for example, fumed or pyrogenic silica.

As used herein, "agglomerated" is descriptive of a weak association of primary particles usually held together by charge or polarity. Agglomerated particles can typically be broken down into smaller entities by, for example, shearing forces encountered during dispersion of the agglomerated particles in a liquid.

In general, "aggregated" and "aggregates" are descriptive of a strong association of primary particles often bound together by, for example, residual chemical treatment, covalent chemical bonds, or ionic chemical bonds. Further breakdown of the aggregates into smaller entities is very difficult to achieve. Typically, aggregated particles are not broken down into smaller entities by, for example, shearing forces encountered during dispersion of the aggregated particles in a liquid.

As used herein, the term "silica nanoparticle" refers to a nanoparticle having a nanometer scale core with a silica surface. This includes nanoparticle cores that are substantially entirely silica, as well nanoparticle cores comprising other inorganic (e.g., metal oxide) or organic cores having a silica surface. In some embodiments, the core comprises a metal oxide. Any known metal oxide may be used. Exemplary metal oxides include silica, titania, alumina, zirconia, vanadia, chromia, antimony oxide, tin oxide, zinc oxide, ceria, and mixtures thereof. In some embodiments, the core comprises a non-metal oxide.

Generally, the nano-sized silica particles have an average core size of less than 100 nm, more preferably of less than 60 nm, e.g., less than 50 nm, less than 30 nm, or even less than 25 nm. In some embodiments, the nano-sized silica particles have an average core size of at least 5 nm, more preferably at least 9 nm, e.g., at least 15 nm.

Although other methods such as titration and light scattering techniques may be used, the particle size referred to herein is based on transmission electron microscopy (TEM). Using this technique, TEM images of the nanoparticles are collected, and image analysis is used to determine the particle size of each particle. A count-based particle size distribution is then determined by counting the number of particles having a particle size falling within each of a number of predetermined discrete particle size ranges. The number average particle size is then calculated. One such method is described in U.S. Provisional Application 61/303,406 ("Multimodal Nanoparticle Dispersions, Thunhorst et al.) filed 11-February-2010, and will be referred to herein as the "Transmission Electron Microscopy Procedure".

Transmission Electron Microscopy Procedure. To measure the particle size and particle size distribution, a nanoparticle sol is diluted by taking 1 or 2 drops of sol and mixing it with 20 mL of deionized distilled water. The diluted samples are sonicated (Ultrasonic Cleaner, Mettler Electronics Corp., Anaheim, CA) for 10 minutes and a drop of the diluted sample is placed on a 200 mesh Cu TEM grid with a carbon/Formvar film (Product 01801, Ted Pella, Inc, Redding, CA), and dried at ambient conditions.

The dried samples are imaged using a Transmission Electron Microscope (TEM) (HITACHI H-9000NAR, Hitachi, Ltd., Tokyo, Japan) at 300kV with magnifications ranging from 10K times to 50K times depending on the particle sizes in each sample. Images are captured using Gatan Digital Micrograph software on a CCD camera (ULTRASCAN 894, Gatan, Inc., Pleasanton, CA). Each image has a calibrated scale marker.

Particle sizes are measured using a single line through the center of each particle; thus, the measurements are based in the assumption that the particles are spherical. If a particular particle is non-spherical, the measurement line is taken through the longest axis of the particle. In each case, the number of measurements taken on individual particles exceeds that stipulated in the ASTM E122 test method for the error level of 5 nm.

Commercially available silicas include those available from Nalco Chemical Company, Naperville, Illinois (for example, NALCO 1040, 1042, 1050, 1060, 2326, 2327 and 2329); Nissan Chemical America Company, Houston, Texas (e.g., SNOWTEX-ZL, - OL, -O, -N, -C, -20L, -40, and -50); Admatechs Co., Ltd., Japan (for example, SX009-MIE, SX009-MIF, SC1050-MJM, and SC1050-MLV); Grace GmbH & Co. KG, Worms, Germany (e.g., those available under the product designation LUDOX, e.g., P-W50, P-W30, P-X30, P-T40 and P-T40AS); H.C. Stark, Leverkusen, Germany (e.g., those available under the product designation LEVASIL, e.g., 50/50%, 100/45%, 200/30%, 200A/30%, 200/40%, 200A/40%, 300/30% and 500/15%; and Bayer MaterialScience AG, Leverkusen, Germany (e.g., those available under the product designation DISPERCOLL S (e.g., 5005, 4510, 4020 and 3030).

The nanoparticles used in the present disclosure are surface treated. Generally, surface treatment agents for silica nanoparticles are organic species having a first functional group capable of covalently chemically attaching to the silica surface of a nanoparticle, wherein the attached surface treatment agent alters one or more properties of the nanoparticle.

Surface treatment agents often include more than one first functional group capable of attaching to the surface of a nanoparticle. For example, alkoxy groups are common first functional groups that are capable of reacting with free silanol groups on the surface of a silica nanoparticle forming a covalent bond between the surface treatment agent and the silica surface. Examples of surface treatment agents having multiple alkoxy groups include trialkoxy alkylsilanes (e.g., 3-(trimethoxysilyl)propyl methacrylate) and trialkoxy arylsilanes (e.g., trimethoxy phenyl silane). In some embodiments, surface treatment agents have no more than three functional groups for attaching to the core.

The surface treatment agent further includes one or more additional functional groups providing one or more additional desired properties. For example, in some embodiments, an additional functional group may be selected to provide a desired degree of compatibility between the surface modified nanoparticles and one or more of the additional constituents of the composition, e.g., the acrylic copolymer. In some embodiments, an additional functional group may be selected to modify the rheology of the resin system, e.g., to increase or decrease the viscosity, or to provide non-Newtonian rheological behavior, e.g., thixotropy (shear-thinning).

In the PSA formulations of the present disclosure at least a portion of the surface-modified nanoparticles are reactive. Thus, for at least some of the surface-modified nanoparticles, at least one of the surface treatment agents used to surface modify the nanoparticles includes a second functional group capable of reacting with (e.g., copolymerizing with) one or more of the other materials in the pressure sensitive adhesive composition.

Exemplary reactive surface-modifying agents useful for reacting with the components of an acrylic copolymer include (meth)acryloxyalkyl-trialkoxy-silanes (i.e., acryloxyalkyl-trialkoxy-silanes, methacryloxyalkyl-trialkoxy-silanes), and (meth)acryloxyalkyl-(alkyl)dialkoxy-silanes, and combinations thereof. In some embodiments, the alkyl group of the acryloxyalkyl group contains 1 to 6 carbon atoms, e.g., 2 to 4 carbon atoms. In some embodiments, the alkyl group is selected from the group consisting of ethyl and propyl. In some embodiments, the alkoxy group comprises 1 to 3 carbon atoms. In some embodiments, the alkoxy group is selected from the group consisting of methoxy and ethoxy. Exemplary (meth)acryloxyalkyl-trialkoxy-silanes include 3-methacryloxypropyl-trimethoxy silane, 3-methacryloxypropyl-triethoxy silane, and 3-acryloxypropyl-trimethoxy silane. Exemplary (meth)acryloxyalkyl-(alkyl)dialkoxysilanes include 3-((meth)acryloxy)proply-(methyl)dimethoxy silane and 3-((meth)acryloxy)propyl-(methyl)diethoxy silane.

Surface-treating the nano-sized silica particles before dispersing them within the acrylic copolymer can be done using commercially available surface treatment agents. In some embodiments, preferred surface treatment agents include 3-methacryloxypropyl-trimethoxy-silane (MPTMS) and phenyl-trimethoxy-silane (PTMS). Generally, the surface treatment stabilizes the nano-sized silica particles so that a stable, substantially homogeneous dispersion is achieved within the PSA composition. "Stable", as used herein, means a dispersion of surface-treated nano-sized silica particles within a resin in which the particles do not agglomerate after standing for a period of time, such as about 24 hours, under standard ambient conditions, e.g. room temperature (about 23 ± 2°C), atmospheric pressure, and no extreme electromagnetic forces.

In some embodiments, at least 25 mole percent of the surface-modifying agents are reactive, i.e., 25 to 100 mole percent of the surface modifying agents are reactive surface-modifying agents. In some embodiments, at least some of the surface-modifying agents are non-reactive, e.g., in some embodiments, at least 5 mole percent of the surface-modifying agents are non-reactive surface modifying agents. In some embodiments, the molar ratio of reactive surface-modifying groups to non-reactive surface modifying groups is at least 25:75, and in some embodiments, at least 50:50. In some embodiments, molar ratio of reactive surface-modifying groups to non-reactive surface modifying groups is no greater than 90:10, and in some embodiments, no greater than 80:20, e.g., about 75:25.

### Test Methods.

### Examples

**Table 1: Description of materials used in the preparation of examples.**

| Component | Description | Source |
|---|---|---|
| AA | acrylic acid monomer | BASF, Germany |
| 2-EHA | 2-ethylhexylacrylate | BASF, Germany |
| HDDA | 1,6 hexanedioldiacrylate | Sartomer, France |
| PI-1 | 2,2-dimethoxy-2-phenylacetophenone (OMNIRAD BDK) | iGm Resins, Waalwijk, Netherlands |
| | Hydrocarbon resin tackifier (REGALREZ 6108) | Eastman Chemical Co., Kingsport, Tennessee |
| SNP-15S | Aqueous colloidal silica sol, having an average particle size (spherical) of 15 nm* (LEVASIL 200A) | H.C. Starck, Leverkusen, Germany |
| SNP-55S | Aqueous colloidal silica sol, having an average particle size (spherical) of 55 nm * (LEVASIL 50/50) | H.C. Starck, Leverkusen, Germany |
| SNP-50R | Aqueous colloidal silica sol, (string-of-pearls) ** (SNOWTEX ST-PS-M) | Nissan America Chemical Cooperation, Houston |
| MPTMS | 3-methacryloxypropyl-trimethoxy-silane; Reactive surface-modifying agent (GF 31) | Wacker Chemie AG München, Germany |
| PTMS | phenyl-trimethoxy-silane; non-reactive surface modifying agent (Z 6124) | Dow Corning, Wiesbaden, Germany |

| | | |
|---|---|---|
| * Reported value of average particle size said to be derived from electron micrographs. ** Described as a sting-of-pearl particles having a diameter of 18-25 nm and a length of 80-100 nm, as determined by dynamic light scattering. | | |

Substrates. The adhesives were tested using the following substrates. Substrate 1 ("StS") was a polished stainless steel plate cleaned first using methyl ethyl ketone, and second with n-heptane. Substrate 2 ("PE") was a 330 micrometer (13 mil) thick polyethylene film prepared from polyethylene pellets available under the trade designation " VORIDIAN POLYETHYLENE 1550P" available from Eastman Chemical Co., Kingsport, TN. The film was fixed on an aluminum plate (150mm x 50 mm x 2 mm), and testing was done on the smooth side of the polyethylene film. Substrate 3 ("PP") was a polypropylene plate available under the trade designation Kunststoffprüfkörper natur "Fabrikat Simona DWST" (150 mm x 50 mm x 2 mm) from Rocholl GmbH, Germany. The test panels were cleaned using a mixture of isopropyl alcohol : distilled water (1:1). The cleaned panels were dried using a tissue.

### Test Methods

90° Angle Peel Adhesion Strength Procedure. The 90° peel adhesion was measured in the following manner, which is in accordance with the test method FINAT No. 2. The test was run at 25 °C and 50% relative humidity (RH).

A strip 12.7 mm wide and 175 mm in length was cut out in the machine direction from the coated pressure sensitive adhesive sample. The backing was removed from the strip and the strip was placed on a clean test plate, with the adhesive side down, using finger pressure. The standard FINAT test roller (2 kg) was rolled once in each direction at a speed of approximately 10 mm per second to obtain intimate contact between the adhesive mass and the substrate surface. After applying the strip to the test plate, the test plate was left at room temperature for a period of 24 hours before testing. The test plate and strip were fixed into a horizontal support, which had been secured into the bottom jaw of the tensile tester. The testing machine (Zwick/Roell Z2020, Ulm, Germany) was set at 300 mm (millimeter) per minute jaw separation rate. The test results are expressed in Newton per 12.7 mm. The quoted peel values are the average of five 90° peel measurements.

Static Shear Test Procedure. The "Static Shear," is a measure of the ability of a pressure sensitive adhesive tape to remain adhered to a substrate at a temperature of 70 °C while under a constant load of 0.5 kg applied in a direction parallel to the surface of the tape and substrate. Static shear was measured using a stainless steel in the following manner, which is in accordance with test method FINAT No. 8, except that the tests were run at 70 °C using a 0.5 kg load rather than at room temperature with a 1 kg load.

A strip of 25 mm wide and more than 100 mm in length was cut in the machine direction from the adhesive sample. A loop was prepared at one end of the strip in order to hold the specified weight. The strip was attached to the edge of the panel using the opposite end to the loop. The strip was attached precisely and bubble free so, as to obtain a bonded area of 25 x 25 mm. The standard FINAT test roller (2 kg) was rolled once in each direction at a speed of approx. 10 mm per second to obtain intimate contact between the adhesive mass and the substrate surface. After a dwell time of 24 hours at room temperature, the test sample was transferred to a fixture and positioned such that substrate was disposed at an angle of 2 degrees to the vertical with the loop end of the tape extended downward at an angle of 178 degrees to the test panel. The test panels were placed in the shear stand and after a period of 10 min. at the specific test temperature of 70 °C, the specified load of 0.5 kg was placed in the loop of the sample. The timer was started. The test was stopped at failure and the test results were expressed in minutes. The quoted static shear values are the average of three shear measurements. The test was stopped after 10,000 minutes; therefore, samples that did not fail are reported as 10,000+.

Dispersion Preparation Procedure. Dispersions of surface-modified, nano-sized silica were prepared in curable resins. The nano-sized silica particles can be surface-treated and dispersed within the curable resin as described in US 6,899,948 B2, incorporated herein by reference. A preferred method of surface-treating and dispersing is described in Example 3, column 32, rows 31 to 42, as summarized below.

The desired amount of the surface-modifying agent(s) are added to methoxypropanol and mixed. This alcohol solution is added to a silica sol slowly with swirling (1-2 minutes) and maintained at a temperature of about 80 °C for about 16 hours. The surface-modified silica sol is solvent exchanged by mixing the sol with 2-EHA and heating the modified organic sol in an oven at 85-90 °C for 4 hours.

As is understood by one of ordinary skill in the art, such a procedure can be used with a wide variety of silica sols including those described herein, including sodium and ammonium stabilized silica sols. Also, other solvents such as ethanol, n-propanol and/or iso-propanol could be used instead of or with methoxypropanol. This process is also suitable to a wide variety of surface-modifying agents, including both reactive and non-reactive surface modifying agents. This process is also not limited by the resin into which the surface-modified nanoparticles are dispersed. Finally, process modification may also be used. For example, in some embodiments, the lower temperatures and the use of a vacuum can be desirable. For example, a surface-modified silica sol could be solvent exchanged by mixing the sol with, e.g., 2-EHA and the modified organic sol could then be processed by applying a vacuum and heating in an oven at 40 to 60°C until completion.

PSA Preparation Procedure. First, the polymerizable monomers and a photoinitiator were combined in a glass vessel and stirred for 30 minutes. The mixture was then inerted by bubbling a nitrogen gas stream into it for 10 minutes. The inerted mixture was then polymerized by UV radiation to a degree of approximately 8 % and a Brookfield viscosity of 3500 centipoise (cps). At this point air was introduced to the syrup to stop the polymerization.

Second, as identified in each example below, additional materials were added to the partially polymerized syrup and stirred for 30 minutes to provide a coating composition. The coating composition was coated between two one-side-siliconized release liners (HOSTAPHAN 2SLK, 75 micron, from Mitsubishi) and then subsequently passed through a UV-curing station having a length of 3 meters according to the Curing Procedure.

Curing Procedure. Curing was effected both from the top, i.e. in a direction towards the liquid precursor layer covered with a release liner and from the bottom, i.e. in a direction towards the substrate. The intensities provided in both directions were set at equal levels. The radiation was provided by fluorescent lamps at a wavelength between 300 - 400 nm with a maximum at 351 nm. The total radiation intensity irradiated cumulatively from top and bottom and the respective length of three zones were as follows: Zone 1, 37.5 cm length, total intensity of 2.3 mW/cm²; Zone 2, 162.5 cm length, total intensity 0.88 mW/cm², and Zone 3, 100 cm length, total intensity 4.95 mW/cm².

Comparative Examples CE-1, CE-2, and CE-3. Comparative examples were prepared to demonstrate the generally understood trade-off between shear and peel strength when using conventional crosslinking agents in both untackified and tackified adhesives. Adhesives were prepared according to the PSA Preparation Procedure. The syrup was prepared using 2-EHA (97.5 %), AA (2.5%) and 0.04 pph of the PI-1 photoinitiator. Next, an additional 0.16 pph PI-1 photoinitiator was added to the resulting clear syrup. In addition, varying amounts of a conventional crosslinker (HDDA) and a hydrocarbon tackifier resin (REGALREZ 6108) were added to the syrup, as summarized in Table 2. The samples were then cured according to the Curing Procedure.

The cured samples were tested using the 90° Angle Peel Adhesion Strength Procedure and the Static Shear Test Procedure. The results are summarized in Table 2.

**Table 2: Adhesive performance of Comparative Examples CE-1, CE-2, and CE-3.**

| Ex. | HDDA (pph) | Tackifier (pph) | Static Shear (minutes) | 90° peel (N/12. 7 mm) | | |
|---|---|---|---|---|---|---|
| | | | | StS | PE | PP |
| CE-1 | 0.08 | 0 | 10,000+ | 5.4 | 2.2 | 3.3 |
| CE-2 | 0.16 | 0 | 10,000+ | 4.1 | 1.8 | 2.7 |
| CE-3 | 0.08 | 20 | 70 | 9.3 | 3.5 | 5.1 |

As shown in Table 2, increasing the amount of a conventional crosslinking agent such as HDDA resulted in a reduction in the 90° peel adhesion for each of the substrates. Although the addition of the tackifier increased the peel adhesion for all substrates, there was a dramatic decrease in the shear strength.

Comparative Examples CE-4 and CE-5. Comparative examples were prepared to demonstrate the effects of adding nanoparticles surface-modified with only non-reactive silane surface-modifying agents. Tackified adhesives were prepared according to the PSA Preparation Procedure. The syrup was prepared using 2-EHA (97.7 %), AA (2.3%) and 0.04 pph of the PI-1 photoinitiator. Next, an additional 0.16 pph PI-1 photoinitiator and 20 pph of a hydrocarbon tackifier resin (REGALREZ 6108) were added to the resulting clear syrup. Silica nanoparticles (SNP-15S silica sol) were surface-modified with a non-reactive silane surface modifying agent (PTMS), and added to the syrup as summarized in Table 3. The resulting samples were cured according to the Curing Procedure.

The cured samples were tested by the 90° Angle Peel Adhesion Strength Procedure and the Static Shear Test Procedure. The results are summarized in Table 3. Both samples exhibited shocky, rather than the generally desired smooth peel. In addition, these samples did not include a crosslinker, and poor shear results were obtained.

**Table 3: Tackified adhesive performance of Comparative Examples CE-4 and CE-5 containing non-reactive surface-modified nanoparticles.**

| | Silica | | | Static Shear (minutes) | 90° peel (N/12. 7 mm) | | |
|---|---|---|---|---|---|---|---|
| Ex. | sol | size (nm) | pph | | StS | PE | PP |
| CE-4 | SNP-15S | 15 | 4 | 5 | 14.8 | 3.1 | 2.8 |
| CE-5 | SNP-15S | 15 | 5 | 6 | 14.2 | 3.3 | 2.6 |

### Comparative Example CE-6 and Examples EX-1 and EX-2.

Untackified adhesives were prepared according to the PSA Preparation Procedure. The syrup was prepared using 2-EHA, AA, and 0.04 pph of the PI-1 photoinitiator. Next, an additional 0.16 pph PI-1 photoinitiator was added to the resulting clear syrup. Surface-modified nanoparticles were prepared from the SNP-15S silica sol using 75 mole percent of a reactive silane surface modifying agent (MPTMS) and 25 mole percent of a non-reactive (PTMS) silane surface modifying agent. The surface-modified nanoparticles were then added to the syrup and the resulting samples were cured according to the Curing Procedure.

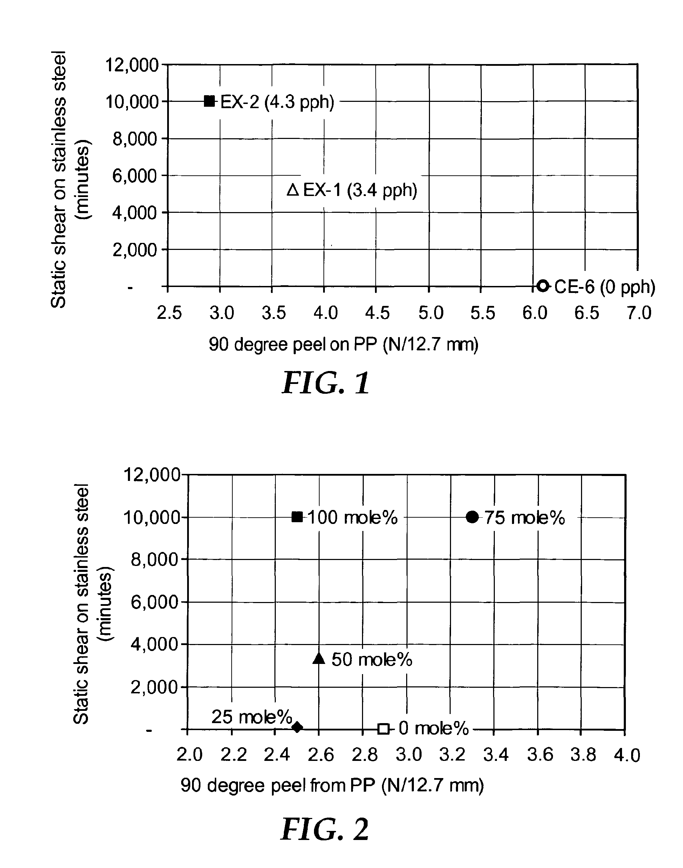

The cured samples were tested by the 90° Angle Peel Adhesion Strength Procedure and the Static Shear Test Procedure. The results are summarized in Table 4 and shown in FIG. 1.

**Table 4: Untackified adhesive performance with increasing amounts of surface-modified nanoparticles (Comparative Example CE-6, and Examples EX-1 and EX-2).**

| Ex. | 2-EHA | AA | SM-np* (pph) | Static Shear (minutes) | 90° peel (N/12. 7 mm) |
|---|---|---|---|---|---|
| | | | | | PP |
| CE-6 | 97.5 % | 2.5 % | 0 | 0 | 6.1 |
| EX-1 | 97.4 % | 2.6% | 3.4 | 5,260 | 3.7 |
| EX-2 | 97.4 % | 2.6% | 4.3 | 10,000 + | 2.9 |

| | | | | | |
|---|---|---|---|---|---|
| * nanoparticles surface-modified with 75 mole % MPTMS and 25 mole % PTMS | | | | | |

Comparative Example CE-7 and Examples EX-3, EX-4, EX-5, and EX-6.

Untackified adhesives were prepared according to the PSA Preparation Procedure. The syrup was prepared using 2-EHA (97.5 %), AA (2.5%) and 0.04 pph of the PI-1 photoinitiator. Next, an additional 0.16 pph PI-1 photoinitiator was added to the resulting clear syrup. Surface-modified nanoparticles were prepared from the SNP-15S silica sol using various ratios of a reactive silane surface modifying agent (MPTMS) and a non-reactive (PTMS) silane surface modifying agent, as summarized in Table 5. The surface-modified nanoparticles (3.5 pph) were then added to the syrup and the resulting samples were cured according to the Curing Procedure.

The cured samples were tested by the 90° Angle Peel Adhesion Strength Procedure and the Static Shear Test Procedure. The results are summarized in Table 5, and shown in FIG. 2.

**Table 5: Untackified adhesive performance with increasing amounts of reactive surface-modifier (Comparative Examples CE-7, and Examples EX-4 through EX-6).**

| Ex. | Silica sol | Size (nm) | Mole % | | Static Shear (minutes) | 90° peel (N/12. 7 mm) | | |
|---|---|---|---|---|---|---|---|---|
| | | | MPTMS | PTMS | | StS | PE | PP |
| CE-7 | none | -- | -- | -- | 4 | 23.2 | 4.1 | 2.9 |
| EX-3 | SNP-15S | 15 | 25 | 75 | 110 | 6.8 | 3.6 | 2.5 |
| EX-4 | SNP-15S | 15 | 50 | 50 | 3350 | 7.4 | 3.5 | 2.6 |
| EX-5 | SNP-15S | 15 | 75 | 25 | 10,000+ | 4.9 | 2.3 | 3.3 |
| EX-6 | SNP-15S | 15 | 100 | 0 | 10,000+ | 4.5 | 1.8 | 2.5 |

### Comparative Example CE-8 and Examples EX-7 through EX-11.

Tackified adhesives were prepared according to the PSA Preparation Procedure. The syrup was prepared using 0.04 pph of the PI-1 photoinitiator and various amounts of 2-EHA and AA, as summarized in Table 6. Following this step, an additional 0.16 ph PI-1 photoinitiator and 20 pph of a hydrocarbon tackifier resin (REGALREZ 6108) were added to the resulting clear syrup. In addition, surface-modified nanoparticles were prepared from the SNP-15S silica sol, using 75 mole % of the MPTMS reactive surface-modifying agent and 25 mole% of the PTMS non-reactive surface-modifying agent. The surface-modified nanoparticles were added to the syrup in the amounts summarized in Table 6. The samples were then cured according to the Curing Procedure, except for Example EX-8. For example EX-8, the UV curing conditions were adjusted as follows: Zone 1, total intensity of 2.73 mW/cm²; Zone 2, total intensity 3.25 mW/cm², and Zone 3, total intensity 4.95 mW/cm².

The cured samples were tested according to the 90° Angle Peel Adhesion Strength Procedure and the Static Shear Test Procedure.

**Table 6: Tackified adhesive performance of CE-8 and Examples EX-7 through EX-11.**

| Ex. | 2-EHA | AA | SM-np* (pph) | Static Shear (minutes) | 90° peel (N/12. 7 mm) | | |
|---|---|---|---|---|---|---|---|
| | | | | | StS | PE | PP |
| CE-8 | 97.5 | 2.5 | 0 | 0 | -- | -- | -- |
| EX-7 | 98.5 | 1.5 | 4 | 144 | 8.5 | 6.2 | 4.5 |
| EX-8 | 97.5 | 2.5 | 4 | 202 | 8.9 | 3.3 | 3.5 |
| EX-9 | 97 | 3 | 4 | 2170 | 10.6 | 2.7 | 3.7 |
| EX-10 | 97.75 | 2.25 | 5 | 6210 | 8.1 | 3.3 | 4.5 |
| EX-11 | 97.5 | 2.5 | 5 | 10,000+ | 8.4 | 3.4 | 4.8 |

| | | | | | | | |
|---|---|---|---|---|---|---|---|
| * nanoparticles surface-modified with 75 mole % MPTMS and 25 mole % PTMS. | | | | | | | |

### Examples EX-12 through EX-14.

Untackified adhesives similar to Example EX-6 were prepared according to the PSA Preparation Procedure. The syrup was prepared using 2-EHA (97.5 %), AA (2.5%) and 0.04 pph of the PI-1 photoinitiator. Next, an additional 0.16 ph PI-1 photoinitiator was added to the resulting clear syrup. In addition, surface-modified nanoparticles were prepared from various silica sols using 100 mole % of the MPTMS reactive surface-modifying agent, as summarized in Table 7. The surface-modified nanoparticles (3.5 pph) were added to the syrup. The samples were then cured according to the Curing Procedure.

The cured samples were tested according to the 90° Angle Peel Adhesion Strength Procedure and the Static Shear Test Procedure. The results are summarized in Table 7. The results for Comparative Example CE-6 and Example EX-6 are also included.

**Table 7: Untackified adhesive performance of Comparative Examples CE-6, and Examples EX-6, and EX-12 through EX-14.**

| Ex. | Silica sol | Size (nm) | Silica shape | Static Shear (minutes) | 90° peel (N/12. 7 mm) | | |
|---|---|---|---|---|---|---|---|
| | | | | | StS | PE | PP |
| CE-6 | none | -- | -- | 4 | 23.2 | 4.1 | 2.9 |
| EX-6 | SNP-15S | 15 | spherical | 10,000+ | 4.5 | 1.8 | 2.5 |
| EX-12 | SNP-55S | 55 | spherical | 10 | 10.2 | 3.0 | 3.2 |
| EX-13 | SNP-15S/ SNP-55S | 15,55 | spherical | 90 | 6.6 | 2.3 | 3.3 |
| EX-14 | SNP-50R | 50 | string-of-pearls | 343 | 5.8 | 2.1 | 3.2 |

Various modifications and alterations of this invention will become apparent to those skilled in the art without departing from the scope and spirit of this invention.

## Claims

1. A pressure sensitive adhesive composition comprising:
(a) an acrylic copolymer comprising the reaction product of at least one (meth)acrylate monomer and at least 0.5 weight percent of at least one vinyl carboxylic acid based on the total weight of the acrylic copolymer; and
(b) between 0.5 and 8 parts by weight, inclusive, surface-modified silica nanoparticles per 100 parts by weight of the acrylic copolymer,
wherein the surface-modified silica nanoparticles comprising nanoparticles having a silica surface and a plurality of silane surface-modifying groups covalently bonded to the silica surface;
wherein at least 25 mole percent of the plurality of silane surface-modifying groups comprise reactive silane surface-modifying groups, and further wherein for at least some of the surface modified nanoparticles, at least one of the plurality of silane surface-modifying groups includes a second functional group capable of reacting with the acrylic copolymer.

2. The pressure sensitive adhesive of claim 1, wherein the acrylic copolymer comprises the reaction product of at least one (meth)acrylate monomer and no greater than 5 weight percent of the vinyl carboxylic acid based on the total weight of the acrylic copolymer.

3. The pressure sensitive adhesive according to any one of the preceding claims, wherein the acrylic copolymer comprises the reaction product of at least one (meth)acrylate monomer between 1.5 and 3 weight percent of the vinyl carboxylic acid based on the total weight of the acrylic copolymer.

4. The pressure sensitive adhesive according to any one of the preceding claims, wherein the at least one (meth)acrylate monomer is selected from the group consisting of isooctyl (meth)acrylate and 2-ethylhexyl (meth)acrylate.

5. The pressure sensitive adhesive according to any one of the preceding claims, wherein the acrylic copolymer comprises the reaction product of a first (meth)acrylate monomer and a second (meth)acrylate monomer, wherein the second (meth)acrylate monomer is nonpolar.

6. The pressure sensitive adhesive according to any one of the preceding claims, wherein at least one vinyl carboxylic acid is acrylic acid.

7. The pressure sensitive adhesive according to any one of the preceding claims, further comprising a tackifier.

8. The pressure sensitive adhesive according to claim 7, wherein the tackifier is a hydrogenated hydrocarbon tackifier.

9. The pressure sensitive adhesive according to any one of the preceding claims, wherein the composition comprises 2 to 6 parts by weight, inclusive, of the surface-modified silica nanoparticles per 100 parts by weight of the acrylic copolymer.

10. The pressure sensitive adhesive according any one of the preceding claims, wherein the reactive silane surface-modifying agent comprises a (meth)acryloxyalkyl-tri alkoxy-silane.

11. The pressure sensitive adhesive of claim 10, wherein the reactive silane surface-modifying agent is 3-methacryloxypropyl-trimethoxy-silane.

12. The pressure sensitive adhesive according to any one of the preceding claims, wherein at least 5 mole percent of the plurality of silane surface-modifying groups comprise non-reactive silane surface-modifying groups.

13. The pressure sensitive adhesive according to claim 12, wherein the molar ratio of the reactive surface-modifying groups to the non-reactive silane surface-modifying groups is at least 50:50.

14. The pressure sensitive adhesive of claim 12 or 13, wherein the non-reactive silane surface-modifying groups comprise a C4 to C12, alkyl or aryl group.

15. The pressure sensitive adhesive of claim 14, wherein the non-reactive silane surface-modifying groups comprise trimethoxy phenyl silane.

## Patentansprüche

1. Haftklebstoffzusammensetzung, umfassend:
(a) ein Acrylcopolymer, umfassend das Reaktionsprodukt von mindestens einem (Meth)Acrylat-Monomer und mindestens 0,5 Gewichtsprozent mindestens einer Vinylcarbonsäure, bezogen auf das Gesamtgewicht des Acrylcopolymers; und
(b) zwischen 0,5 und 8 Gewichtsteile inklusive oberflächenmodifizierte Siliciumdioxid-Nanopartikel pro 100 Gewichtsteile des Acrylcopolymers, wobei die oberflächenmodifizierten Siliciumdioxid-Nanopartikel Nanopartikel mit einer Siliciumdioxidoberfläche und mehreren kovalent an die Siliciumdioxidoberfläche gebundenen Silanoberflächenmodifizierungsgruppen umfassen;
wobei mindestens 25 Molprozent der mehreren Silanoberflächenmodifizierungsgruppen reaktive Silanoberflächenmodifizierungsgruppen umfassen und ferner für mindestens einige der oberflächenmodifizierten Nanopartikel mindestens eine der mehreren Silanoberflächenmodifizierungsgruppen eine zweite funktionelle Gruppe, die mit dem Acrylcopolymer reagieren kann, enthält.

2. Haftklebstoff nach Anspruch 1, wobei das Acrylcopolymer das Reaktionsprodukt von mindestens einem (Meth)Acrylat-Monomer und höchstens 5 Gewichtsprozent der Vinylcarbonsäure, bezogen auf das Gesamtgewicht des Acrylcopolymers, umfasst.

3. Haftklebstoff nach einem der vorhergehenden Ansprüche, wobei das Acrylcopolymer das Reaktionsprodukt von mindestens einem (Meth)Acrylat-Monomer und zwischen 1,5 und 3 Gewichtsprozent der Vinylcarbonsäure, bezogen auf das Gesamtgewicht des Acrylcopolymers, umfasst.

4. Haftklebstoff nach einem der vorhergehenden Ansprüche, wobei das mindestens eine (Meth)Acrylat-Monomer aus der Gruppe bestehend aus Isooctyl(meth)acrylat und 2-Ethylhexyl(meth)acrylat ausgewählt ist.

5. Haftklebstoff nach einem der vorhergehenden Ansprüche, wobei das Acrylcopolymer das Reaktionsprodukt eines ersten (Meth)Acrylat-Monomers und eines zweiten (Meth)Acrylat-Monomers umfasst, wobei das zweite (Meth)Acrylat-Monomer unpolar ist.

6. Haftklebstoff nach einem der vorhergehenden Ansprüche, wobei es sich bei der mindestens einen Vinylcarbonsäure um Acrylsäure handelt.

7. Haftklebstoff nach einem der vorhergehenden Ansprüche, der ferner einen Klebrigmacher umfasst.

8. Haftklebstoff nach Anspruch 7, wobei sich bei dem Klebrigmacher um einen hydrierten Kohlenwasserstoff-Klebrigmacher handelt.

9. Haftklebstoff nach einem der vorhergehenden Ansprüche, wobei die Zusammensetzung 2 bis 6 Gewichtsteile inklusive der oberflächenmodifizierten Siliciumdioxid-Nanopartikel pro 100 Gewichtsteile des Acrylcopolymers umfasst.

10. Haftklebstoff nach einem der vorhergehenden Ansprüche, wobei das reaktive Silanoberflächenmodifizierungsmittel ein (Meth)Acryloxyalkyl-trialkoxy-silan umfasst.

11. Haftklebstoff nach Anspruch 10, wobei es sich bei dem reaktiven Silanoberflächenmodifizierungsmittel um 3-Methacryloxypropyl-trimethoxy-silan handelt.

12. Haftklebstoff nach einem der vorhergehenden Ansprüche, wobei mindestens 5 Molprozent der mehreren Silanoberflächenmodifizierungsgruppen unreaktive Silanoberflächenmodifizierungsgruppen umfassen.

13. Haftklebstoff nach Anspruch 12, wobei das Molverhältnis von reaktiven Silanoberflächenmodifizierungsgruppen zu unreaktiven Silanoberflächenmodifizierungsgruppen mindestens 50:50 beträgt.

14. Haftklebstoff nach Anspruch 12 oder 13, wobei die unreaktiven Silanoberflächenmodifizierungsgruppen eine C4- bis C12-Alkyl- oder Arylgruppe umfassen.

15. Haftklebstoff nach Anspruch 14, wobei die unreaktiven Silanoberflächenmodifizierungsgruppen Trimethoxyphenylsilan umfassen.

## Revendications

1. Composition d'adhésif sensible à la pression comprenant :
(a) un copolymère acrylique comprenant le produit réactionnel d'au moins un monomère (méth)acrylate et d'au moins 0,5 % en poids d'au moins un acide vinylcarboxylique relativement au poids total du copolymère acrylique ; et
(b) de 0,5 à 8 parties pondérales, inclusivement, de nanoparticules de silice modifiées en surface par 100 parties pondérales du copolymère acrylique,
dans laquelle les nanoparticules de silice modifiées en surface comprennent des nanoparticules ayant une surface en silice et une pluralité de groupes silane modificateurs de surface liés de façon covalente à la surface en silice ;
dans laquelle au moins 25 %mol de la pluralité de groupes silane modificateurs de surface comprennent des groupes silane modificateurs de surface réactifs, et en outre dans laquelle, pour au moins certaines des nanoparticules modifiées en surface, au moins un de la pluralité de groupes silane modificateurs de surface contient un deuxième groupe fonctionnel capable de réagir avec le copolymère acrylique.

2. Adhésif sensible à la pression selon la revendication 1, dans lequel le copolymère acrylique comprend le produit réactionnel d'au moins un monomère (méth)acrylate et d'au maximum 5 % en poids de l'acide vinylcarboxylique relativement au poids total du copolymère acrylique.

3. Adhésif sensible à la pression selon l'une quelconque des revendications précédentes, dans lequel le copolymère acrylique comprend le produit réactionnel d'au moins un monomère (méth)acrylate et de 1,5 % à 3 % en poids de l'acide vinylcarboxylique relativement au poids total du copolymère acrylique.

4. Adhésif sensible à la pression selon l'une quelconque des revendications précédentes, dans lequel ledit au moins un monomère (méth)acrylate est sélectionné dans le groupe constitué du (méth)acrylate d'isooctyle et du (méth)acrylate de 2-éthylhexyle.

5. Adhésif sensible à la pression selon l'une quelconque des revendications précédentes, dans lequel le copolymère acrylique comprend le produit réactionnel d'un premier monomère (méth)acrylate et d'un deuxième monomère (méth)acrylate, le deuxième monomère (méth)acrylate étant non polaire.

6. Adhésif sensible à la pression selon l'une quelconque des revendications précédentes, dans lequel au moins un acide vinylcarboxylique est l'acide acrylique.

7. Adhésif sensible à la pression selon l'une quelconque des revendications précédentes, comprenant en outre un agent collant.

8. Adhésif sensible à la pression selon la revendication 7, dans lequel l'agent collant est un agent collant hydrocarbure hydrogéné.

9. Adhésif sensible à la pression selon l'une quelconque des revendications précédentes, dans lequel la composition comprend de 2 à 6 parties pondérales, inclusivement, des nanoparticules de silice modifiées en surface par 100 parties pondérales du copolymère acrylique.

10. Adhésif sensible à la pression selon l'une quelconque des revendications précédentes, dans lequel l'agent silane modificateur de surface réactif comprend un (méth)acryloxyalkyl-trialcoxysilane.

11. Adhésif sensible à la pression selon la revendication 10, dans lequel l'agent silane modificateur de surface réactif est le 3-méthacryloxypropyl-triméthoxysilane.

12. Adhésif sensible à la pression selon l'une quelconque des revendications précédentes, dans lequel au moins 5 %mol de la pluralité de groupes silane modificateurs de surface comprennent des groupes silane modificateurs de surface non réactifs.

13. Adhésif sensible à la pression selon la revendication 12, dans lequel le rapport molaire des groupes silane modificateurs de surface réactifs contre les groupes silane modificateurs de surface non réactifs est d'au moins 50:50.

14. Adhésif sensible à la pression selon la revendication 12 ou 13, dans lequel les groupes silane modificateurs de surface non réactifs comprennent un groupe alkyle ou aryle C₄-C₁₂.

15. Adhésif sensible à la pression selon la revendication 14, dans lequel les groupes silane modificateurs de surface non réactifs comprennent le triméthoxyphénylsilane.
